# EUROPÄISCHE PATENTSCHRIFT

(11) **EP 2 420 460 B1**
(45) Veröffentlichungstag und Bekanntmachung des Hinweises auf die Patenterteilung: **19.06.2013**
(21) Anmeldenummer: 11006548.9
(22) Anmeldetag: 09.08.2011
(51) Int. Cl.: B65G 47/08, B65B 25/06, B65B 57/14

(54) **Verfahren und Vorrichtung zum Fördern von Gegenständen**
Method and apparatus for conveying articles
Procédé et dispositif pour convoyer des objets

(30) Priorität: 18.08.2010 DE 102010034676
(43) Veröffentlichungstag der Anmeldung: 22.02.2012
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A2- 0 726 098
- US-A1- 2010 101 191

## Beschreibung

Die Erfindung betrifft ein Verfahren sowie eine Vorrichtung zum Fördern von Gegenständen, insbesondere von durch gleichzeitiges Aufschneiden mehrerer Lebensmittelprodukte erzeugten Produktscheiben oder von jeweils mehrere Produktscheiben umfassenden Portionen.

Sollen Gegenstände mehrspurig in vorgegebenen Sollanordnungen oder Formatsätzen gefördert werden, kann es zu Problemen dann kommen, wenn es - aus welchen Gründen auch immer - zu Fehlstellen kommt, also zu unvollständigen Anordnungen von Gegenständen, und eine der Fördervorrichtung nachgeordnete Einrichtung mit unvollständigen Anordnungen entweder überhaupt nicht oder nur unter Inkaufnahme von Nachteilen arbeiten kann.

Solche Situationen können insbesondere dann auftreten, wenn es sich bei den zu fördernden Gegenständen um durch gleichzeitiges Aufschneiden mehrerer Lebensmittelprodukte erzeugte Produktscheiben oder um jeweils mehrere Produktscheiben umfassende Portionen handelt.

Bei der gewünschten Sollanordnung handelt es sich beispielsweise um eine sich quer zur Förderrichtung erstreckende Reihe von Portionen. Selbst wenn in allen Spuren ein Produkt aufgeschnitten wird und aus den dabei abgetrennten Produktscheiben Portionen gebildet werden, kann es trotzdem zu Fehlstellen kommen, wenn aufgrund von Fehlern Portionen aussortiert werden müssen. Ein Fehler kann beispielsweise vorliegen, wenn die Portion ein zu geringes Gewicht aufweist, wenn der Fettgehalt der die Portion bildenden Scheiben zu hoch ist oder das Aussehen der Portion nicht den gewünschten Kriterien entspricht.

Fehlstellen in den Sollanordnungen, beispielsweise in den erwähnten Querreihen, können auch dadurch entstehen, dass die gleichzeitig aufgeschnittenen Produkte unterschiedlich lang sind, so dass das Aufschneiden eines kürzeren Produkts früher beendet ist als das Aufschneiden eines längeren Produktes. In der Spur des kürzeren Produktes werden dann vorübergehend keine Portionen gebildet, während in der oder den anderen Spuren die längeren Produkte weiterhin aufgeschnitten werden, so dass in diesen Spuren ein Abtransport der gebildeten Portionen erforderlich ist.

Die vorstehend geschilderten Ursachen sind lediglich als Beispiele zu verstehen. Die Gründe für Fehlstellen in den Sollanordnungen können vielfältig sein.

Es ist bekannt, im Hinblick auf der Fördervorrichtung nachgeordnete Einrichtungen Fehlstellen in Sollanordnungen dadurch zu kompensieren, dass die nachgeordnete Einrichtung die Gegenstände nicht unmittelbar von der Fördervorrichtung übernimmt, sondern dass eine Übergabeeinrichtung, beispielsweise ein oder mehrere Roboter, zwischengeschaltet werden, welche die Gegenstände von der Fördervorrichtung entnehmen und an die nachgeordnete Einrichtung übergeben kann.

Hierdurch kann beispielsweise sichergestellt werden, dass der Betrieb einer Verpackungsmaschine für aus Lebensmittelscheiben gebildete Portionen nicht dadurch beeinträchtigt wird, dass die Portionen von der Fördervorrichtung gelegentlich nicht in der gewünschten Sollanordnung herangeführt werden. Der Roboter kann die herangeführten Portionen direkt in die Verpackungsmaschine einlegen oder auf einem Einlegesystem einen so genannten Formatsatz bilden, der eine oder mehrere Sollanordnungen umfasst.

Problematisch bei dieser Vorgehensweise ist, dass die Leistungsfähigkeit bzw. Kapazität der Aufschneidevorrichtung für die Lebensmittelprodukte an die Leistungsfähigkeit bzw. Kapazität des oder der Roboter angepasst werden muss. Moderne Hochgeschwindigkeits-Slicer besitzen derart hohe Schneidleistungen, dass ein für die Verpackungsmaschine vorgesehener Roboter mit einer Kinematik ausgestattet sein müsste, die sehr schnelle Bewegungsabläufe gestattet. Selbst wenn eine derartige Kinematik technisch realisierbar ist, besitzt ein entsprechend ausgestatteter Roboter häufig nicht die von der Praxis geforderte Tragfähigkeit, d.h. ab einem bestimmten Portionsgewicht können die Portionen nicht mehr mit der eigentlich gewünschten Geschwindigkeit bewegt werden. Alternativ können für die Verpackungsmaschine mehrere Roboter beispielsweise in einer Hintereinanderanordnung vorgesehen werden, was allerdings nicht nur die Kosten erhöht, sondern auch in einer relativ großen Baulänge der Anlage resultiert.

Alternativ ist es auch möglich, Fehlstellen in den Sollanordnungen einfach hinzunehmen, was allerdings zur Folge hat, dass in der Verpackungsmaschine immer wieder Leerpackungen erzeugt werden. Dies ist vor dem Hintergrund der durch Leerpackungen erhöhten Produktionskosten nicht wünschenswert, zumal nicht nur Verpackungsmaterial vergeudet wird, sondern auch auf der Verpackungsmaschine nachgeschalteten Einheiten aufgrund der Leerpackungen Transportprobleme auftreten können.

Die EP 0 726 098 A2 offenbart eine Vorrichtung gemäß dem Oberbegriff des Anspruchs 6 und beschreibt ein Fördersystem für Nahrungsmittelmaschinen. Eine Reihe von Gruppen von Nahrungsmitteln wird von einer Nahrungsmittelmaschine zu einem Verwendungsort gefördert, wobei die Nahrungsmittelmaschine Messmittel enthält, um zurückgewiesene Gruppen von akzeptierten Gruppen zu unterscheiden. Die akzeptierten Gruppen werden von einem Akzeptanz-Förderer an einen Akzeptanzort geliefert. Über einen Zurückweisungs-Förderer können zurückgewiesene Gruppen von einem Bediener zu einem Korrekturbehälter umgeleitet werden. Dort können diese korrigiert werden, um akzeptierte Gruppen zu bilden und auf dem Akzeptanz-Förderer abgelegt zu werden.

Aufgabe der Erfindung ist es, in einem Umfeld der eingangs beschriebenen Art Beeinträchtigungen durch Fehlstellen in Sollanordnungen auf möglichst einfache und zuverlässige Art zu vermeiden.

Das erfindungsgemäße Verfahren löst diese Aufgabe insbesondere dadurch, dass die Gegenstände in einer Förderrichtung auf einer Hauptförderstrecke mehrspurig in von Gegenständen mehrerer Spuren gebildeten Sollanordnungen, insbesondere in sich quer zur Förderrichtung erstreckenden Reihen, gefördert werden, dass wenigstens eine Fehlstelle aufweisende unvollständige Anordnungen von Gegenständen auf eine Nebenförderstrecke ausgeschleust werden, und dass aus den die unvollständigen Anordnungen bildenden Gegenständen Sollanordnungen gebildet werden.

Zudem ist erfindungsgemäß vorgesehen , dass auf der Nebenförderstrecke den unvollständigen Anordnungen die Gegenstände nacheinander, insbesondere einzeln, entnommen und die Sollanordnungen jeweils nach und nach aus den entnommenen Gegenständen gebildet werden. Hierbei können die Sollanordnungen folglich Stück für Stück aus einzelnen Gegenständen, die jeweils den unvollständigen Anordnungen entnommen werden, aufgebaut werden. Grundsätzlich ist es aber auch möglich, gleichzeitig mehrere Gegenstände aus den unvollständigen Anordnungen zu entnehmen und für den Aufbau der Sollanordnungen zu verwenden.

Das Entnehmen der Gegenstände einerseits und das Bilden der Sollanordnungen andererseits erfolgen an längs einer Förderrichtung der Nebenförderstrecke voneinander beabstandeten Bereichen.

Es ist vorgesehen, dass die auf der Nebenförderstrecke gebildeten Sollanordnungen wieder in die Hauptförderstrecke eingeschleust werden. Dieses Einschleusen kann zu einem grundsätzlich beliebigen geeigneten Zeitpunkt erfolgen. Insbesondere ist es möglich, durch das Ausschleusen unvollständiger Anordnungen entstandene Lücken auf der Hauptförderstrecke wieder durch auf der Nebenförderstrecke gebildete Sollanordnungen zu schließen.

Die erfindungsgemäße Vorrichtung löst diese Aufgabe insbesondere dadurch, dass sie umfasst: wenigstens eine Hauptförderstrecke zum mehrspurigen Fördern von Gegenständen in einer Förderrichtung in von Gegenständen mehrerer Spuren gebildeten Sollanordnungen, insbesondere in sich quer zur Förderrichtung erstreckenden Reihen, zumindest eine Nebenförderstrecke für wenigstens eine Fehlstelle aufweisende unvollständige Anordnungen von Gegenständen, wenigstens eine Ausschleuseinrichtung zum Ausschleusen von unvollständigen Anordnungen auf die Nebenförderstrecke, und wenigstens eine der Nebenförderstrecke zugeordnete Formatiervorrichtung. Die Formatiervorrichtung ist dazu ausgebildet, aus den die unvollständigen Anordnungen bildenden Gegenständen Sollanordnungen zu bilden.

Des Weiteren umfasst die Fördervorrichtung zumindest eine Einschleuseinrichtung zum Einschleusen von auf der Nebenförderstrecke gebildeten Sollanordnungen in die Hauptförderstrecke.

Die Erfindung schafft somit zusätzlich zu einer Hauptförderstrecke für die in Sollanordnung befindlichen Gegenstände eine Nebenförderstrecke, auf der während des auf der Hauptförderstrecke laufenden Förderbetriebs aus den Gegenständen, welche die unvollständigen Anordnungen bilden, Sollanordnungen gebildet werden können. Ein Vorteil hierbei besteht darin, dass auf der Nebenförderstrecke die Bildung der Sollanordnungen nicht so schnell erfolgen muss, dass sie der "normalen" Fördergeschwindigkeit auf der Hauptförderstrecke entspricht. Bei der Bildung der Sollanordnungen auf der Nebenförderstrecke handelt es sich insofern also nicht um einen zeitkritischen Prozess. Die für die Nebenförderstrecke erforderlichen Einrichtungen brauchen daher in Bezug auf ihre Arbeitsgeschwindigkeit nicht derart hohen Anforderungen zu genügen, wie dies für auf der Hauptförderstrecke arbeitende Einrichtungen der Fall wäre. Hierdurch können die Kosten für die erfindungsgemäße Beseitigung von Fehlstellen beträchtlich reduziert werden.

Sollanordnungen von Gegenständen, die an nachgeordnete Einrichtungen wie z.B. Verpackungsmaschinen für Portionen aus Lebensmittelscheiben zu fördern sind, werden auch als Formatsatz bezeichnet. In der hier verwendeten Terminologie besteht ein Formatsatz aus einer oder mehreren Sollanordnungen, die jeweils von Gegenständen mehrerer Spuren, in denen die Gegenstände gefördert werden, gebildet werden. Die Bildung von Sollanordnungen aus den Gegenständen unvollständiger Anordnungen auf der Nebenförderstrecke kann insofern auch als Formatsatzbildung bezeichnet werden. So gesehen sieht die Erfindung also eine Formatsatzbildung aus unvollständigen Spuren vor.

In einem Ausführungsbeispiel der Erfindung ist dementsprechend vorgesehen, dass auf der Hauptförderstrecke Formatsätze gebildet werden, die jeweils wenigstens eine Sollanordnung von Gegenständen umfassen. Vorzugsweise ist ein Formatsatz eine Matrix aus wenigstens einer Reihe von senkrecht zur Förderrichtung angeordneten Gegenständen.

Bevorzugt sieht das Verfahren vor, dass die unvollständigen Anordnungen auf der Nebenförderstrecke gestoppt werden. Hierbei ruhen also die Gegenstände, bevor sie zur Bildung der Sollanordnungen herangezogen werden.

Die Erfindung betrifft auch ein Verfahren zum Erzeugen und Verpacken von jeweils mehrere Produktscheiben umfassenden Portionen, bei denen die Portionen durch gleichzeitiges, mehrspuriges Aufschneiden mehrerer Lebensmittelprodukte mittels wenigstens einer Aufschneidevorrichtung, insbesondere eines Hochleistungs-Slicers, erzeugt werden, und sich in einer Sollanordnung befindliche Portionen mittels einer Verpackungsmaschine verpackt werden, wobei die Portionen zwischen der Aufschneidevorrichtung und der Verpackungsmaschine gemäß einem Förderverfahren der hier beschriebenen Art gefördert werden.

Bei der erfindungsgemäßen Vorrichtung ist die Formatiervorrichtung insbesondere dazu ausgebildet, den unvollständigen Anordnungen die Gegenstände nacheinander, insbesondere einzeln, zu entnehmen und die Sollanordnungen jeweils nach und nach aus den entnommenen Gegenständen zu bilden.

Wenn die Buchstaben n und m jeweils eine Spurnummer bedeuten, dann ist bevorzugt die Formatiervorrichtung dazu ausgebildet, einen Gegenstand aus der Spur n zu entnehmen und bei der Bildung einer Sollanordnung an die Spur m zu übergeben, wobei mit der Formatiervorrichtung sowohl der Fall n = m als auch der Fall n ≠ m realisierbar ist. Die Formatiervorrichtung zeichnet sich hierbei also durch eine hohe Flexibilität aus, da die Gegenstände der unvollständigen Anordnungen nicht auf der Spur verbleiben müssen, auf der sie sich in der unvollständigen Anordnung befinden.

Des Weiteren kann vorgesehen sein, dass die Formatiervorrichtung zwischen zwei längs einer Förderrichtung der Nebenförderstrecke voneinander beabstandeten Bereichen angeordnet ist, von denen der eine Bereich zum Entnehmen der Gegenstände aus den unvollständigen Anordnungen und der andere Bereich zum Bilden der Sollanordnungen vorgesehen ist.

Bevorzugt umfasst die Formatiervorrichtung wenigstens eine quer zu einer Förderrichtung der Nebenförderstrecke bewegbare Querfördereinheit. In einem Ausführungsbeispiel handelt es sich bei der Querfördereinheit um einen Bandförderer, dessen Förderrichtung zumindest in dessen Bereich mit der Förderrichtung der Nebenförderstrecke übereinstimmt, wobei der Bandförderer selbst quer zu dieser Förderrichtung verfahren werden kann. Dabei ist insbesondere die quer zur Förderrichtung der Nebenförderstrecke gemessene wirksame Breite der Querfördereinheit kleiner als die Breite der Sollanordnung.

In einem Ausführungsbeispiel umfasst die Formatiervorrichtung zusätzlich zu der Querfördereinheit einen Stoppförderer zur Aufnahme und Bereitstellung unvollständiger Anordnungen sowie einen Gruppierförderer zur Bildung der Sollanordnungen, wobei die Querfördereinheit dazu ausgebildet ist, Gegenstände von dem Stoppförderer an den Gruppierförderer zu übergeben. Bei dem Stoppförderer und/oder dem Gruppierförderer handelt es sich insbesondere um einen Bandförderer.

Alternativ oder zusätzlich kann die Formatiervorrichtung wenigstens einen Roboter umfassen, der dazu ausgebildet ist, Gegenstände an einem Ort aufzunehmen und an einem anderen Ort abzusetzen. Der Roboter kann folglich aus den Gegenständen ankommender unvollständiger Anordnungen nach und nach Sollanordnungen aufbauen, wobei hierbei der Roboter im Hinblick auf die Arbeitsgeschwindigkeit keine aufwendigen Kinematiken aufweisen muss, da es sich - wie bereits erwähnt - bei der Bildung der Sollanordnungen auf der Nebenförderstrecke um einen zeitunkritischen Prozess handelt.

Die Erfindung betrifft außerdem eine Produktionslinie mit wenigstens einer Aufschneidevorrichtung, insbesondere einem Hochleistungs-Slicer, zum gleichzeitigen, mehrspurigen Aufschneiden mehrerer Lebensmittelprodukte in jeweils mehrere Produktscheiben umfassende Portionen, zumindest einer Fördervorrichtung der hier beschriebenen Art, sowie wenigstens einer Verpackungsmaschine zum Verpacken von sich in Sollanordnung befindlichen Portionen.

Weitere mögliche Ausgestaltungen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: schematisch eine Seitenansicht einer erfindungsgemäßen Produktionslinie mit einer erfindungsgemäßen Fördervorrichtung, und
- Fig. 2: schematisch eine Draufsicht auf ein Ausführungsbeispiel einer erfindungsgemäßen Fördervorrichtung.

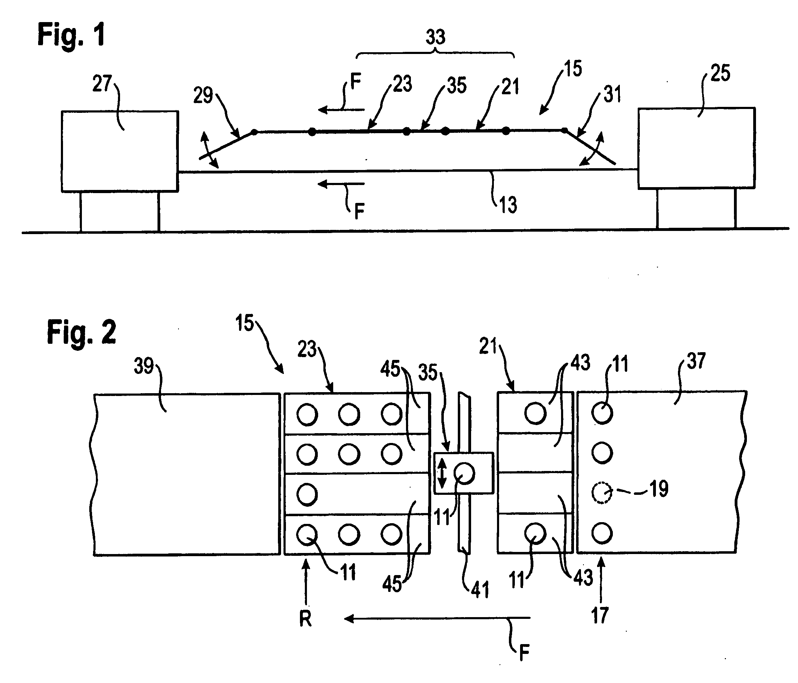

Die erfindungsgemäße Produktionslinie gemäß Fig. 1 umfasst einen Hochgeschwindigkeits-Slicer 25, der dazu ausgebildet ist, mehrspurig zugeführte Lebensmittelprodukte gleichzeitig in Scheiben zu schneiden. Derartige Slicer sind grundsätzlich bekannt. Unterschiede können beispielsweise in Ausgestaltung und Bewegungsablauf des zum Aufschneiden verwendeten Schneidmessers und in der Ausgestaltung der Produktzuführung bestehen.

Aus den von den Produkten in den einzelnen Spuren abgetrennten Scheiben werden Portionen gebildet, wobei die Portionen in den Spuren gleichzeitig entstehen, wenn in jeder Spur ein Produkt aufgeschnitten wird. Das portionierte Aufschneiden sowie Mittel zur Portionsbildung und gegebenenfalls zur so genannten Portionskomplettierung sind in vielfältiger Ausgestaltung bekannt.

Gemäß der hier verwendeten Terminologie liegt eine Sollanordnung von Portionen vor, wenn in jeder Spur eine Portion vorhanden ist und diese Portionen eine sich quer zu einer Förderrichtung F erstreckende Reihe bilden. Ein Formatsatz besteht aus einer oder mehreren Sollanordnungen dieser Art.

Die Sollanordnungen bzw. Formatsätze werden auf einer in Fig. 1 lediglich schematisch dargestellten Hauptförderstrecke 13 in Förderrichtung F einer Verpackungsmaschine 27 zugeführt, die dafür ausgelegt ist, die Portionen in einer bestimmten Sollanordnung bzw. in einem bestimmten Formatsatz zu empfangen, d.h. in einer Anordnung, die keine Fehlstellen aufweist.

Aus Gründen, wie sie beispielsweise im Einleitungsteil erwähnt sind, lässt es sich in der Praxis meistens nicht vermeiden, dass Fehlstellen und somit unvollständige Anordnungen von Portionen entstehen. Damit keine unvollständigen Anordnungen an die Verpackungsmaschine 27 übergeben werden, ist erfindungsgemäß zusätzlich zu der Hauptförderstrecke 13 eine Nebenförderstrecke 15 vorgesehen, die in dem in Fig. 1 dargestellten Ausführungsbeispiel oberhalb der Hauptförderstrecke 13 verläuft.

Auf die Nebenförderstrecke 15 können die unvollständigen Anordnungen mittels einer so genannten Eingangswippe 31 gelangen, bei der es sich beispielsweise um einen schwenkbaren Bandförderer handeln kann, wie es durch den Doppelpfeil in Fig. 1 angedeutet ist. Die Wippe 31 bildet eine Einrichtung zum Ausschleusen von unvollständigen Anordnungen auf die Nebenförderstrecke 15.

Die erfindungsgemäße, die Hauptförderstrecke 13 und die Nebenförderstrecke 15 umfassende Fördervorrichtung zwischen dem Slicer 25 und der Verpackungsmaschine 27 ist mit einer nicht dargestellten Steuereinheit verbunden, die dazu ausgebildet ist, Fehlstellen und somit unvollständige Anordnungen zu detektieren und die Ausschleuseinrichtung 31 entsprechend anzusteuern, damit unvollständige Anordnungen auf die Nebenförderstrecke 15 gelangen können.

Die Nebenförderstrecke 15 umfasst eine Formatiereinheit 33, die in dem hier dargestellten Ausführungsbeispiel einen Stoppförderer 21, eine Formatiervorrichtung 35 mit einer Querfördereinheit sowie einen Gruppierförderer 23 umfasst. Bei diesen Einrichtungen handelt es sich jeweils um einen Bandförderer, insbesondere einen Endlosbandförderer. Ein mögliches Ausführungsbeispiel für eine solche Formatiereinheit 33 ist nachstehend in Verbindung mit Fig. 2 näher beschrieben.

Sowohl der Stoppförderer 21 als auch der Gruppierförderer 23 ist eine Kombination von - in Förderrichtung F gesehen - nebeneinander angeordneten, unabhängig voneinander betreibbaren Spurförderern 43 bzw. 45. Jeder Spurförderer 43 bzw. 45 ist einer Spur der Produktionslinie zugeordnet. In dem hier dargestellten Ausführungsbeispiel umfasst die Produktionslinie vier Spuren.

Wie Fig. 2 weiter zeigt, gelangen auf der Nebenförderstrecke 15 unvollständige, also wenigstens eine Fehlstelle 19 aufweisende Anordnungen 17 von einem Förderer 37 auf die einzelnen Spurförderer 43 des Stoppförderers 21. Der Stoppförderer 21 übernimmt die vorhandenen Portionen 11 der unvollständigen Anordnung 17 und hält an, so dass die unvollständige Anordnung auf dem Stoppförderer 21 zur Ruhe kommt. Die nächste unvollständige Anordnung wird vom Stoppförderer 21 erst dann aufgenommen, wenn alle Portionen 11 der aufgenommenen unvollständigen Anordnung vom Stoppförderer 21 entnommen worden sind.

Dieses Entnehmen von Portionen 11 erfolgt mittels der Querfördereinheit 35, deren Endlosförderband längs einer Querführung 41 quer zur Förderrichtung F verfahrbar ist, wie es durch den Doppelpfeil angedeutet ist. In dem dargestellten Ausführungsbeispiel ist der Bandförderer der Querfördereinheit 35 mit einer wirksamen Breite versehen, die etwa der Breite einer Spur entspricht, d.h. in einer Richtung quer zur Förderrichtung F gesehen kann die hier dargestellte Querfördereinheit 35 eine Portion aufnehmen.

In Abhängigkeit von der Situation auf dem Gruppierförderer 23 wird eine entnommene Portion 11 einem der Spurförderer 45 des Gruppierförderers 23 zugeführt. Für die Zuordnung sorgt die erwähnte Steuereinheit.

Auf diese Weise können nach und nach aus den Portionen 11 der unvollständigen Anordnungen 17 Sollanordnungen R auf dem Gruppierförderer 23 aufgebaut werden. Eine derartige Sollanordnung R ist in dem Ausführungsbeispiel der Fig. 2 bereits auf dem Gruppierförderer 23 vorhanden. Durch gleichzeitiges Betreiben aller Spurförderer 45 des Gruppierförderers 23 kann diese Sollanordnung R folglich an den nachgeordneten Förderer 39 übergeben werden.

Es ist alternativ aber beispielsweise auch möglich, die auf dem Gruppierförderer 23 momentan noch freien Stellen jeweils mit einer Portion 11 zu belegen, da die Spurförderer 45 des Gruppierförderers 23 auch entgegen der Förderrichtung F betrieben werden können, d.h. der in Fig. 2 die beiden freien Stellen aufweisende Spurförderer 45 kann entgegen der Förderrichtung F betrieben werden, um die vordere freie Stelle zur Übernahme der mit der Querfördereinheit 35 herantransportierten Portion 11 bereitzustellen, woraufhin dieser Spurförderer 45 in Förderrichtung F betrieben wird, um die nächste mittels der Querfördereinheit 35 angelieferte Portion 11 aufzunehmen.

Hierdurch entsteht auf dem Gruppierförderer 23 eine vollständige 3 x 4-Matrix aus drei Sollanordnungen R. Diese Matrix kann einen Formatsatz bilden, wie er für die Verpackungsmaschine 27 (vgl. Fig. 1) benötigt wird.

Die einzelnen Sollanordnungen R bzw. die aus einer oder mehreren derartigen Sollanordnungen R bestehenden Formatsätze, die erfindungsgemäß auf der Nebenförderstrecke 15 aus den Portionen der unvollständigen Anordnungen 17 gebildet werden, können wieder in die Hauptförderstrecke 13 eingeschleust werden (vgl. Fig. 1). Hierzu dient eine am Ende der Nebenförderstrecke 15 vorgesehene Ausgangswippe 29, die ebenfalls mit der erwähnten Steuereinheit verbunden ist.

Die Erfindung ist grundsätzlich nicht auf das Fördern von Portionen aus Lebensmittelscheiben beschränkt. Grundsätzlich können beliebige Gegenstände gefördert werden. Bei der nachgeschaltete Einrichtung muss es sich ferner nicht um eine Verpackungsmaschine handeln.

Die Erfindung ist allgemein in Anwendungen einsetzbar, in denen ausgangsseitig Sollanordnungen erwartet werden, eingangsseitig aber unvollständige Anordnungen - aus welchen Gründen auch immer - entstehen können.

**Bezugszeichenliste**

| | |
|---|---|
| 11 | Gegenstand, Portion |
| 13 | Hauptförderstrecke |
| 15 | Nebenförderstrecke |
| 17 | unvollständige Anordnung |
| 19 | Fehlstelle |
| 21 | Stoppförderer |
| 23 | Gruppierförderer |
| 25 | Aufschneidevorrichtung, Slicer |
| 27 | Verpackungsmaschine |
| 29 | Einschleuseinrichtung, Ausgangswippe |
| 31 | Ausschleuseinrichtung, Eingangswippe |
| 33 | Formatiereinheit |
| 35 | Formatiervorrichtung, Querfördereinheit |
| 37 | Förderer |
| 39 | Förderer |
| 41 | Querführung |
| 43 | Spurförderer |
| 45 | Spurförderer |
| | |
| F | Förderrichtung |
| R | Sollanordnung, Reihe |

## Patentansprüche

1. Verfahren zum Fördern von Gegenständen (11), insbesondere von durch gleichzeitiges Aufschneiden mehrerer Lebensmittelprodukte erzeugten Produktscheiben oder von jeweils mehrere Produktscheiben umfassenden Portionen,
bei dem
- die Gegenstände (11) in einer Förderrichtung (F) auf einer Hauptförderstrecke (13) mehrspurig in von Gegenständen (11) mehrerer Spuren gebildeten Sollanordnungen (R), insbesondere in sich quer zur Förderrichtung (F) erstreckenden Reihen, gefördert werden,
- wenigstens eine Fehlstelle (19) aufweisende unvollständige Anordnungen (17) von Gegenständen (11) auf eine Nebenförderstrecke (15) ausgeschleust werden,
- aus den die unvollständigen Anordnungen (17) bildenden Gegenständen (11) Sollanordnungen (R) gebildet werden, **dadurch gekennzeichnet, dass**
- auf der Nebenförderstrecke (15) den unvollständigen Anordnungen (17) die Gegenstände (11) nacheinander entnommen und die Sollanordnungen (R) jeweils nach und nach aus den entnommenen Gegenständen (11) gebildet werden,
- das Entnehmen von Gegenständen (11) und das Bilden der Söllanordnungen (R) an längs einer Förderrichtung (F) der Nebenförderstrecke (15) voneinander beabstandeten Bereichen (21, 23) erfolgen, und
- die auf der Nebenförderstrecke (15) gebildeten Sollanordnungen (R) wieder in die Hauptförderstrecke (13) eingeschleust werden.

2. Verfahren nach Anspruch 1,
**dadurch gekennzeichnet,**
**dass** auf der Hauptförderstrecke (13) Formatsätze gebildet werden, die jeweils wenigstens eine Sollanordnung, (R) von Gegenständen (11) umfassen.

3. Verfahren nach Anspruch 2,
**dadurch gekennzeichnet,**
**dass** ein Formatsatz eine Matrix aus wenigstens einer Reihe (R) von senkrecht zur Förderrichtung (F) angeordneten Gegenständen (11) ist.

4. Verfahren nach einem der vorhergehenden Ansprüche,
**dadurch gekennzeichnet,**
**dass** die unvollständigen Anordnungen (17) auf der Nebenförderstrecke (15) gestoppt werden.

5. Verfahren zum Erzeugen und Verpacken von jeweils mehrere Produktscheiben umfassenden Portionen (11), bei dem die Portionen (11) durch gleichzeitiges, mehrspuriges Aufschneiden mehrerer Lebensmittelprodukte mittels wenigstens einer Aufschneidevorrichtung (25), insbesondere eines Hochleistungs-Slicers, erzeugt werden, und
sich in einer Sollanordnung (R) befindliche Portionen (11) mittels einer Verpackungsmaschine (27) verpackt werden,
wobei die Portionen (11) zwischen der Aufschneidevorrichtung (25) und der Verpackungsmaschine (27) gemäß einem Verfahren nach einem der Ansprüche 1 bis 4 gefördert werden.

6. Vorrichtung zum Fördern von Gegenständen (11), insbesondere von durch gleichzeitiges Aufschneiden mehrerer Lebensmittelprodukte erzeugten Produktscheiben oder von jeweils mehrere Produktscheiben umfassenden Portionen, mit
- wenigstens einer Hauptförderstrecke (13) zum mehrspurigen Fördern von Gegenständen (11) in einer Förderrichtung (F) in von Gegenständen (11) mehrerer Spuren gebildeten Sollanordnungen (R), insbesondere in sich quer zur Förderrichtung (F) erstreckenden Reihen (R),
- zumindest einer Nebenförderstrecke (15) für wenigstens eine Fehlstelle (19) aufweisende unvollständige Anordnungen (17) von Gegenständen (11),
- wenigstens eine Ausschleuseinrichtung (29) zum Ausschleusen von unvollständigen Anordnungen (17) auf die Nebenförderstrecke (15), **gekennzeichnet durch**
- wenigstens eine der Nebenförderstrecke (15) zugeordneten Formatiervorrichtung (35), die dazu ausgebildet ist, aus den die unvollständigen Anordnungen (17) bildenden Gegenständen (11) Sollanordnungen (R) zu bilden, und
- zumindest eine Einschleuseinrichtung (31) zum Einschleusen von auf der Nebenförderstrecke (15) gebildeten Sollanordnungen (R) in die Hauptförderstrecke (13).

7. Vorrichtung nach Anspruch 6,
**dadurch gekennzeichnet,**
**dass** die Formatiervorrichtung (35) dazu ausgebildet ist, den unvollständigen Anordnungen (17) die Gegenstände (11) nacheinander, insbesondere einzeln, zu entnehmen und die Sollanordnungen (R) jeweils nach und nach aus den entnommenen Gegenständen (11) zu bilden.

8. Vorrichtung nach Anspruch 6 oder 7,
**dadurch gekennzeichnet,**
**dass** die Formatiervorrichtung (35) dazu ausgebildet ist, einen Gegenstand (11) aus der Spur n zu entnehmen und bei der Bildung einer Sollanordnung (R) an die Spur m zu übergeben, wobei mit der Formatiervorrichtung (35) sowohl n = m als auch n # m realisierbar ist.

9. Vorrichtung nach Anspruch 7 oder 8,
**dadurch gekennzeichnet,**
**dass** die Formatiervorrichtung (35) zwischen zwei längs einer Förderrichtung (F) der Nebenförderstrecke (15) voneinander beabstandeten Bereichen (21, 23) angeordnet ist, von denen der eine Bereich (21) zum Entnehmen der Gegenstände (11) aus den unvollständigen Anordnungen (17) und der andere Bereich (23) zum Bilden der Sollanordnungen (R) vorgesehen ist.

10. Vorrichtung nach einem der Ansprüche 6 bis 9,
**dadurch gekennzeichnet,**
**dass** die Formatiervorrichtung (35) wenigstens eine quer zu einer Förderrichtung (F) der Nebenförderstrecke (15) bewegbare Querfördereinheit, insbesondere einen Bandförderer, umfasst, wobei insbesondere die quer zur Förderrichtung (F) der Nebenförderstrecke (15) gemessene wirksame Breite der Querfördereinheit kleiner ist als die Breite der Sollanordnung (R).

11. Vorrichtung nach Anspruch 10,
**dadurch gekennzeichnet,**
**dass** die Formatiervorrichtung (35) zusätzlich einen, insbesondere als Bandförderer ausgebildeten, Stoppförderer (21) zur Aufnahme und Bereitstellung unvollständiger Anordnungen (17) und einen, insbesondere als Bandförderer ausgebildeten, Gruppierförderer (23) zur Bildung der Sollanordnungen (R) umfasst, wobei die Querfördereinhert, dazu ausgebildet ist, Gegenstände von dem Stoppförderer (21) an den Gruppierförderer (23) zu übergeben.

12. Vorrichtung nach einem der Ansprüche 6 bis 11,
**dadurch gekennzeichnet,**
**dass** die Formatiervorrichtung (35) wenigstens einen Roboter umfasst, insbesondere einen Pick-and-Place-Roboter, der zum Aufnehmen von, insbesondere einzelnen, Gegenständen (11) an einem Ort und Absetzen der Gegenstände (11) an einem anderen Ort ausgebildet ist.

13. Produktionslinie mit
wenigstens einer Aufschneidevorrichtung (25), insbesondere einem Hochleistungs-Slicer, zum gleichzeitigen, mehrspurigen Aufschneiden mehrerer Lebensmittelprodukte in jeweils mehrere Produktscheiben umfassende Portionen (11),
zumindest einer Fördervorrichtung nach einem der Ansprüche 6 bis 12, und
wenigstens einer Verpackungsmaschine (27) zum Verpacken von sich in Sollanordnung (R) befindlichen Portionen (11).

## Claims

1. A method of conveying articles (11), in particular product slices produced by simultaneous slicing of a plurality of food products or respective portions including a plurality of product slices,
wherein
- the articles (11) are conveyed in a conveying direction (F) on a main conveying path (13) in multitracks in desired arrangements (R) formed by articles (11) from a plurality of tracks, in particular in rows extending transverse to the conveying direction (F);
- incomplete arrangements (17) of articles (11) having at least one deficient point (19) are expelled onto a secondary conveying path (15);
- desired arrangements (R) are formed from the articles (11) forming the incomplete arrangements (17),
**characterized in that**
- the articles (11) are removed from the incomplete arrangements (17) on the secondary conveying path (15) sequentially and the desired arrangements (R) are each formed gradually from the removed articles (11);
- the removal of articles (11) and the forming of the desired arrangements (R) take place at regions (21, 23) spaced apart from one another along a conveying direction (F) of the secondary conveying path (15); and
- the desired arrangements (R) formed on the secondary conveying path (15) are channeled back into the main conveying path (13).

2. A method in accordance with claim 1,
**characterized in that**
format sets are formed on the main conveying path (13) which each include at least one desired arrangement (R) of articles (11).

3. A method in accordance with claim 2,
**characterized in that**
one format set is a matrix of at least one row (R) of articles (11) arranged perpendicular to the conveying direction (F).

4. A method in accordance with any one of the preceding claims, **characterized in that**
the incomplete arrangements (17) are stopped on the secondary conveying path (15).

5. A method of producing and packaging respective portions (11) including a plurality of product slices, wherein
the portions (11) are produced by simultaneous multitrack slicing of a plurality of food products by means of at least one slicing apparatus (25), in particular a high-performance slicer; and portions (11) located in a desired arrangement (R) are packed by means of a packaging machine (27),
wherein the portions (11) are conveyed between the slicing apparatus (25) and the packaging machine (27) in accordance with a method in accordance with any one of the claims 1 to 4.

6. An apparatus for conveying articles (11), in particular product slices produced by simultaneous slicing of a plurality of food products or respective portions including a plurality of product slices, comprising
- at least one main conveying path (13) for the multitrack conveying of articles (11) in a conveying direction (F) in desired arrangements (R) formed by articles (11) from a plurality of tracks, in particular in rows (R) extending transverse to the conveying direction (F);
- at least one secondary conveying path (15) for incomplete arrangements (17) of articles (11) having at least one deficient point (19);
- at least one expulsion device (29) for expelling incomplete arrangements (17) onto the secondary conveying path (15);
**characterized by**
- at least one formatting apparatus (35) which is associated with the secondary conveying path (15) and which is designed to form desired arrangements (R) from the articles (11) forming the incomplete arrangements (17); and
- at least one channeling-in device (31) for channeling desired arrangements (R) formed on the secondary conveying path (15) into the main conveying path (13).

7. An apparatus in accordance with claim 6,
**characterized in that**
the formatting apparatus (35) is designed to remove the articles (11) from the incomplete arrangements (17) sequentially, in particular individually, and to form the desired arrangements (R) in each case gradually from the removed articles (11).

8. An apparatus in accordance with claim 6 or claim 7,
**characterized in that**
the formatting apparatus (35) is designed to remove an article (11) from the track n and, on the formation of a desired arrangement (R), to transfer it to the track m, with both n = m and n ≠ m being able to be realized with the formatting apparatus (35).

9. An apparatus in accordance with claim 7 or claim 8,
**characterized in that**
the formatting apparatus (33) is arranged between two regions (21, 23) which are spaced apart from one another along a conveying direction (F) of the secondary conveying path (15) and of which the one region (21) is provided for removing the articles (11) from the incomplete arrangements (17) and the other region (23) being provided for forming the desired arrangements (R).

10. An apparatus in accordance with any one of the claims 6 to 9,
**characterized in that**
the formatting apparatus (35) includes at least one transverse conveying unit, in particular a belt conveyor, movable transverse to a conveying direction (F) of the secondary conveying path (15), with in particular the effective width of the transverse conveying unit measured transverse to the conveying direction (F) of the secondary conveying unit (15) being smaller than the width of the desired arrangement (R).

11. An apparatus in accordance with claim 10,
**characterized in that**
the formatting apparatus (35) additionally includes a stop conveyor (21), in particular formed as a belt conveyor, for picking up and providing incomplete arrangements (17) and a grouping conveyor (23), in particular formed as a belt conveyor, for forming the desired arrangements (R), with the transverse conveying unit being designed to transfer articles from the stop conveyor (21) to the grouping conveyor (23).

12. An apparatus in accordance with any one of the claims 6 to 11,
**characterized in that**
the formatting apparatus (35) includes at least one robot, in particular a pick-and-place robot, which is designed to pick up articles (11), in particular individual articles, at one position and to place the articles (11) down at a different position.

13. A production line comprising
at least one slicing apparatus (25), in particular a high-performance slicer, for the simultaneous multitrack slicing of a plurality of food products into respective portions (11) including a plurality of product slices;
at least one conveying apparatus in accordance with any one of the claims 6 to 12; and
at least one packaging machine (27) for packing portions (11) located in the desired arrangement (R).

## Revendications

1. Procédé pour convoyer des objets (11), en particulier des tranches de produits engendrées par découpe simultanée de plusieurs produits alimentaires ou des portions incluant chacune plusieurs tranches de produits,
dans lequel
- les objets (11) sont convoyés dans une direction de convoyage (F) sur un trajet de convoyage principal (13) sur plusieurs voies dans des agencements de consigne (R) formés par des objets (11) de plusieurs voies, en particulier dans des rangées s'étendant transversalement à la direction de convoyage (F),
- des agencements (17) d'objets (11) incomplets comportant au moins un emplacement erroné (19) sont aiguillés et sortis vers un trajet de convoyage annexe (15), et
- à partir d'objets (11) formant les agencements incomplets (17) on constitue des agencements de consigne (R),
**caractérisé en ce que**
- on prélève les uns après les autres les objets (11) depuis les agencements incomplets (17) sur le trajet de convoyage annexe (15) et on constitue les agencements de consigne (R) respectivement peu à peu à partir d'objets prélevés (11),
- le prélèvement d'objets (11) et la constitution des agencements de consigne (R) ont lieu sur des régions (21, 23) distantes les unes des autres le long d'une direction de convoyage (F) du trajet de convoyage annexe (15), et
- les agencements de consigne (R) constitués sur le trajet de convoyage annexe sont à nouveau aiguillés et rentrés vers le trajet de convoyage principal (13).

2. Procédé selon la revendication 1,
**caractérisé en ce que** l'on forme sur le trajet de convoyage principal (13) des groupes formatés qui comprennent chacun au moins un agencement de consigne (R) d'objets (11).

3. Procédé selon la revendication 2,
**caractérisé en ce qu'**un groupe formaté est une matrice formée d'au moins une rangée (R) d'objets (11) agencée perpendiculairement à la direction de convoyage (F).

4. Procédé selon l'une des revendications précédentes,
**caractérisé en ce que** les agencements incomplets (17) sont arrêtés sur le trajet de convoyage annexe (15).

5. Procédé pour engendrer et emballer des portions (11) comprenant chacune plusieurs tranches de produits, dans lequel
les portions (11) sont engendrées par découpe simultanée sur plusieurs voies de plusieurs produits alimentaires au moyen d'au moins un dispositif de découpe (25), en particulier d'une trancheuse à haute performance, et
les portions (11) qui se trouvent dans un agencement de consigne (R) sont emballées au moyen d'une machine d'emballage (27),
dans lequel, entre le dispositif de découpe (25) et la machine d'emballage (27), les portions (11) sont convoyées d'après un procédé selon l'une des revendications 1 à 4.

6. Appareil pour convoyer des objets (11), en particulier des tranches de produits engendrés par découpe simultanée de plusieurs produits alimentaires, ou des portions incluant plusieurs tranches de produits, comprenant
- au moins un trajet de convoyage principal (13) pour convoyer des objets (11) sur plusieurs voies dans une direction de convoyage (F) dans des agencements de consigne (R) constitués par des objets (11) de plusieurs voies, en particulier dans des rangées (R) s'étendant transversalement à la direction de convoyage (F),
- au moins un trajet de convoyage annexe (15) pour des agencements incomplets (17) objet (11) comportant au moins un emplacement erroné (19),
- au moins un dispositif d'aiguillage sortant (29) pour aiguiller des agencements incomplets (17) vers le trajet de convoyage annexe (15), **caractérisé par**
- au moins un dispositif de formatage (35) associé au trajet de convoyage annexe (15), qui est réalisé pour constituer des agencements de consigne (R) à partir d'objets (11) constituant les agencements incomplets (17), et
- au moins un dispositif d'aiguillage entrant (31) pour aiguiller des agencements de consigne (R) constitués sur le trajet de convoyage annexe (15) vers le trajet de convoyage principal (13).

7. Appareil selon la revendication 6,
**caractérisé en ce que** le dispositif de formatage (35) est formé pour prélever les objets (11) les uns après les autres, en particulier individuellement, depuis les agencements incomplets (17), et pour constituer les agencements de consigne (R) respectivement peu à peu à partir d'objets prélevés (11).

8. Appareil selon la revendication 6 ou 7,
**caractérisé en ce que** le dispositif de formatage (35) est réalisé pour prélever un objet (11) depuis la voie n et, lors de la formation d'un agencement de consigne (R), pour le remettre à la voie m, et au moyen du dispositif de formatage (35) il est possible de réaliser aussi bien n=mque n ≠ m.

9. Appareil selon la revendication 7 ou 8,
**caractérisé en ce que** le dispositif de formatage (35) est agencé entre deux régions (21, 23) distantes l'une de l'autre le long d'une direction de convoyage (F) du trajet de convoyage annexe (15), parmi lesquelles une région (21) est prévue pour le prélèvement d'objets (11) à partir des agencements incomplets (17), et l'autre région (23) est prévue pour former les agencements de consigne (R).

10. Appareil selon l'une des revendications 6 à 9,
**caractérisé en ce que** le dispositif de formatage (35) comprend au moins une unité de convoyage transversale déplaçable transversalement à une direction de convoyage (F) du trajet de convoyage annexe (15), en particulier un convoyeur à bande, et en particulier la largeur efficace, mesurée transversalement à la direction de convoyage (F) du trajet de convoyage annexe (15), de l'unité de convoyage transversale est plus petite que la largeur de l'agencement de consigne (R).

11. Appareil selon la revendication 10,
**caractérisé en ce que** le dispositif de formatage (35) comprend additionnellement un convoyeur d'arrêt (21), réalisé en particulier comme convoyeur à bande, pour la réception et la tenue à disposition d'agencements incomplets (17), et un convoyeur de groupage (23), réalisé en particulier comme convoyeur à bande, pour constituer les agencements de consigne (R), et l'unité de convoyage transversal est réalisée pour remettre des objets provenant du convoyeur d'arrêt (21) vers le convoyeur de groupage (23).

12. Appareil selon l'une des revendications 6 à 11,
**caractérisé en ce que** le dispositif de formatage (35) comprend au moins un robot, en particulier un robot du type "Pick-and-Place" (prend-et-pose), qui est réalisé pour prendre des objets (11), en particulier individuels, à un emplacement et pour poser les objets (11) à un autre emplacement.

13. Ligne de production comprenant
au moins un dispositif de découpe (25), en particulier une trancheuse à haute performance, destiné à la découpe simultanée sur plusieurs voies de plusieurs produits alimentaires dans des portions (11) incluant chacune plusieurs tranches de produits,
au moins un appareil de convoyage selon l'une des revendications 6 à 12, et
au moins une machine d'emballage (27) pour emballer des portions (11) qui se trouvent dans l'agencement de consigne (R).
